# FASCICULE DE BREVET EUROPEEN

(11) **EP 0 625 308 B1**
(45) Date de publication et mention de la délivrance du brevet: **15.12.1999**
(21) Numéro de dépôt: 94400605.5
(22) Date de dépôt: 21.03.1994
(51) Int. Cl.: A21B 7/00, B01F 15/00

(54) **Procédé et machine de panification**
Verfahren und Vorrichtung zur Herstellung von Brot
Method and device for breadmaking

(30) Priorité: 29.03.1993 IE 930252
(43) Date de publication de la demande: 23.11.1994
(73) Titulaire: B.F.E. LIMITED, Dublin 4 (IE)
(72) Inventeur: Poilane, Lionel, F-75006 Paris (FR)
(74) Mandataire: Orès, Bernard

(56) Documents cités:
- EP-A- 0 359 639
- FR-A- 2 332 793
- FR-A- 2 389 947
- FR-A- 2 515 001
- GB-A- 1 201 365
- GB-A- 2 257 889
- US-A- 4 061 314

## Description

L'invention se rapporte à un procédé et à une machine de panification propres à être mis en oeuvre dans des conditions d'exploitation climatiques les plus diverses ou les plus difficiles, à très bref délai à compter de la mise en route de la machine laquelle, en outre, est aisément transportable, de sorte que du pain peut être produit en quantités importantes pour répondre aux besoins de populations victimes de disette et qu'il faut secourir.

La fabrication du pain, ou panification, comporte trois opérations principales : le pétrissage, destiné à transformer la farine et l'eau en pâte, au moins deux fermentations et la cuisson qui transforme la pâte fermentée en pain. A ces trois opérations principales s'ajoutent plusieurs sous-opérations de manipulation telles que le pesage, le découpage des morceaux ou le façonnage qui permettent la conformation des futurs pains. Cette fabrication exige une main d'oeuvre relativement importante, doit être effectuée dans des conditions parfois difficiles de travail de nuit et c'est pourquoi on a déjà tenté de s'affranchir de ces sujétions en proposant des machines automatiques de panification comme décrit, par exemple, dans FR-A-2 515 001 ou dans US-A-4 061 314 qui vise une machine de fabrication de beignets, c'est-à-dire un domaine, qui tout en étant différent de la panification, pose parfois des problèmes similaires.

On a également déjà proposé des appareils automatiques de fabrication de pain, voir par exemple celui commercialisé sous la référence HB B100 de la Société HITACHI et ceux décrits dans EP-0 243 364, WO-84/02449, EP-0 131 264 ou EP-0 113 327 et qui sont prévus pour une utilisation domestique, dans la cuisine de la ménagère. De tels appareils comprennent essentiellement un récipient dans lequel sont introduits manuellement les ingrédients (farine, sel, eau, levure, etc...) qui y sont ensuite pétris, la cuisson étant effectuée dans le récipient même ou dans un récipient annexe stationnaire ensuite extrait de l'appareil pour retirer et dégager le pain ainsi fabriqué. Il va de soi que de tels appareils sont totalement inappropriés pour une exploitation destinée à satisfaire une demande importante de pain, tandis que les installations industrielles connues ou bien ne sont pas entièrement automatiques et à fonctionnement continu, -comme celle décrite dans FR-A-2 515 001-, ou bien sont des installations complexes de taille importante qui exigent à la fois des équipes d'exploitation et des équipes d'entretien pour satisfaire aux conditions impératives d'hygiène et de contrôle imposées dans les industries de fabrication des produits de l'alimentation humaine.

Le problème se pose, par conséquent, de fournir un procédé et une machine de panification qui pallient les inconvénients des procédés et machines connus. GB-A-1201365 divolgue un tel procédé et une telle machine.

C'est, par conséquent, un but général de l'invention d'apporter une solution à ce problème en proposant un procédé et une machine à l'aide desquels peuvent être obtenus des produits aussi variés et d'aussi bonne qualité que ceux de la panification classique tout en permettant une exploitation automatique et continue du type industrielle.

C'est, aussi, un but de l'invention de fournir un procédé et une machine qui permettent, à partir des matières premières de base qui varient selon l'origine des approvisionnements propres à chaque culture, de modifier à volonté les produits fabriqués, en particulier en ce qui concerne leurs qualités organoleptiques, leurs formes, leurs poids et, d'une manière générale, leurs caractéristiques afin de rendre lesdits produits aussi proches que possible du goût et des habitudes alimentaires des populations qui en bénéficient.

C'est, encore, un but de l'invention de fournir une machine versatile qui soit d'un fonctionnement entièrement automatique et continu, d'un encombrement relativement limité et qui, de ce fait, peut être installée dans des lieux d'exploitation où l'espace disponible est limité comme, par exemple, des navires mais, aussi, dans un tout autre ordre d'idée, des installations de restauration d'organismes publics ou privés ou encore des lieux d'exploitation inhospitaliers en raison de leurs conditions climatiques.

C'est, également, un but de l'invention de fournir une machine compacte ne nécessitant que peu d'énergie pour son fonctionnement et dont les dimensions sont telles qu'elle peut être transportée, avec les moyens de manutention usuels, sur des lieux où n'existe pas ou n'existe plus d'approvisionnement en nourriture, par exemple à la suite de catastrophe naturelle ou autre et qui dès son installation et sa mise en fonctionnement est à même de fournir du pain en quantité importante.

Le procédé de fabrication de pain selon l'invention, suivant lequel on prépare une pâte par pétrissage et on fait cuire des pâtons de pâte fermentée est caractérisé, sous un premier aspect, par le fait que ladite fabrication, continue et automatique, comprend un pétrissage à l'aide d'un dispositif de pétrin-pompe atmosphérique à moyens d'auto-nettoyage intégrés.

La fabrication automatique et en continu permet d'obtenir sans interruption une quantité importante de pâte mise en forme suivant des pâtons qui, après fermentation, sont transformés en produits panifiés tandis que le pétrissage à l'aide d'un pétrin-pompe atmosphérique, -et par conséquent très différent des dispositifs d'extrusion fonctionnant à pression élevée-, permet d'obtenir dans de bonnes conditions et dans un temps relativement court une pâte d'excellente qualité, toutes les conditions impératives d'hygiène étant simultanément remplies en raison de la présence des moyens d'auto-nettoyage intégrés au pétrin-pompe, lequel peut être facilement et complètement nettoyé après chaque processus de fabrication.

Selon l'invention, également, la mise en forme est effectuée avant la fermentation et directement après pétrissage à la sortie du pétrin-pompe, sans phase de repos comme dans les procédés de panification habituels et classiques.

Une autre caractéristique du procédé selon l'invention prévoit de conduire la fabrication de la pâte dans une plage de température prédéterminée, avantageusement de l'ordre de 30 à 40°C, et cela quelles que soient les conditions climatiques du lieu de mise en oeuvre du procédé.

Une telle mesure permet d'éviter les phénomènes de condensation de vapeur d'eau, lesquels pourraient être à l'origine de la formation d'agrégats de farine et d'eau s'opposant à un bon fonctionnement de la machine et à l'écoulement régulier de la farine et de la levure hors de leurs silos respectifs ainsi qu'à un nettoyage satisfaisant.

Selon une autre caractéristique de l'invention, les rapports du mélange farine salée / levure / eau sont choisis en fonction des produits panifiés que l'on souhaite fabriquer et des moyens permettant de régler les quantités délivrées de farine salée et de levure sont commandés en correspondance.

Selon un autre aspect, le procédé de panification selon l'invention est également caractérisé par le fait que l'on prévoit de faire tomber la farine d'une hauteur prédéterminée entre sa sortie du silo, où elle est stockée, et l'entrée du pétrin-pompe atmosphérique.

Selon l'invention, également, les pâtons mis en forme après pétrissage circulent dans une chambre de fermentation où le trajet est suffisamment long pour que la pâte "lève" de façon satisfaisante avant que les pâtons soient introduits dans un four contigü à la chambre de fermentation d'où les produits panifiés sortent après cuisson.

Pour la phase de nettoyage, l'invention propose de modifier le rapport du mélange farine/levure/eau pour rendre plus fluide la pâte fabriquée en continu puis, après une période de temporisation, de procéder à un lavage à l'eau claire.

Une machine de panification selon l'invention comprend alors, en dehors des silos de farine préalablement salée et de levure :
. des moyens pour commander les quantités de farine salée et de levure délivrées à partir de ces silos;
. des moyens d'acheminement par gravité de la farine et de la levure vers un pétrin-pompe atmosphérique où est également amenée l'eau nécessaire en quantité appropriée ;
. une canalisation déformable d'acheminement de la pâte frasée et pétrie en continu dans le pétrin-pompe vers un dispositif de coupe pour former des pâtons ;
. des moyens d'auto-nettoyage intégrés au pétrin-pompe ainsi que des moyens de nettoyage de ladite canalisation d'acheminement de la pâte et du dispositif de coupe de cette dernière ;
. des réceptacles des pâtons, solidaires de chaînes qui les font circuler d'abord suivant un trajet sinueux dans une chambre de fermentation, puis dans un four ; et
. des moyens pour commander le retournement desdits réceptacles et garantir leur déchargement pour que les pains cuits qu'ils portent en soient extraits avant que lesdits réceptacles, en continuant leur mouvement, soient de nouveau amenés à un poste de dépose des pâtons dans lesdits réceptacles.

Dans une réalisation préférée de l'invention, l'eau amenée au pétrin-pompe est à une température préétablie et est chauffée à l'aide d'un serpentin disposé au voisinage des moyens de chauffage de la chambre de fermentation.

Pour le maintien d'une plage de température prédéterminée dans la zone de fabrication de la pâte, avantageusement comprise entre 30 et 40°C, on prévoit de munir la machine selon l'invention de moyens de régulation de ladite température dans ladite plage prédéterminée.

L'invention prévoit aussi d'associer au pétrin-pompe un capteur de pression qui permet de réguler la quantité de pâte fournie par la pompe en direction du dispositif de coupe.

Dans une forme de réalisation préférée de la machine, les réceptacles des pâtons sont des balancelles dont les extrémités longitudinales sont solidaires de deux chaînes synchrones avec, en sortie de machine, des roues dentées et crantées qui provoquent le retournement desdites balancelles garantissant ainsi que les produits panifiés cuits sont effectivement déchargés des balancelles pour que, sur le brin de retour des chaînes, lesdites balancelles soient vides et propres à recevoir à nouveau à leur arrivée au droit du poste de distribution de pâtons, de nouvelles masses pétries pour un fonctionnement en continu.

A la machine sont également associés des moyens de programmation pour sa commande suivant des cycles de fonctionnement automatique choisis à volonté parmi la multiplicité de ceux offerts à l'utilisateur comme la forme (notamment la longueur) et le poids des produits panifiés, leur composition, les heures de fonctionnement, en particulier du démarrage de la machine, le comptage des produits fabriqués, les cycles de nettoyage, etc...

Dans une forme de réalisation préférée de la machine, les moyens d'auto-nettoyage intégrés du pétrin-pompe comprennent des moyens de nettoyage de la vis du pétrin, d'une pale d'extrémité de ladite vis et d'un doigt de pétrissage ainsi que des moyens de nettoyage périphérique de la pompe tandis que les moyens de nettoyage du dispositif de mise en forme des pâtons comportent une goulotte et une pompe d'évacuation de l'eau de nettoyage circulant dans le canal traversant du chariot mobile lorsque celui-ci est dans sa position de nettoyage.

D'autres caractéristiques et avantages de l'invention apparaîtront de la description qui suit, faite à titre d'exemple et en référence au dessin annexé dans lequel :
- la figure 1 est une vue très schématique, en coupe longitudinale, d'une machine selon l'invention ;
- la figure 2 est une vue schématique des moyens de fabrication de pâte ;
- la figure 3 est une vue schématique en coupe du pétrin ;
- la figure 3A est une vue schématique en coupe longitudinale d'un dispositif de pompe à pâte ;
- la figure 4 montre, schématiquement, et en vue de côté, les moyens de coupe de la pâte et de dépose des pâtons dans les réceptacles qui les font circuler au travers de la machine ;
- les figures 5 et 5A sont des vues schématiques de dessus correspondant à celle de la figure 4 ;
- la figure 6 explicite les moyens montrés sur les figures 4 et 5 ;
- la figure 7 montre, schématiquement, des moyens provoquant le retournement des balancelles en sortie de machine ;
- la figure 8 montre, très schématiquement, le circuit d'alimentation en eau d'une machine selon l'invention.

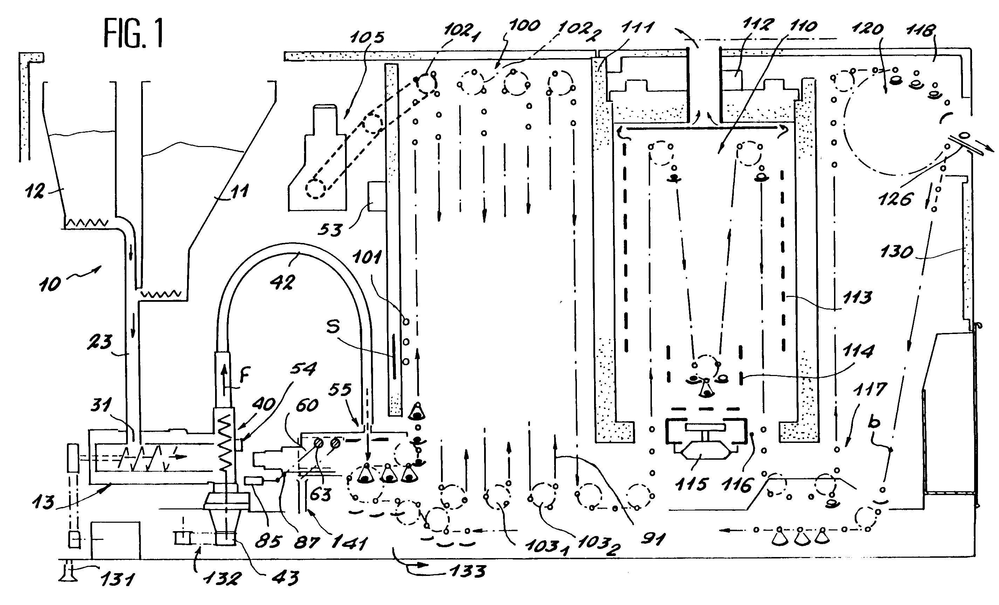

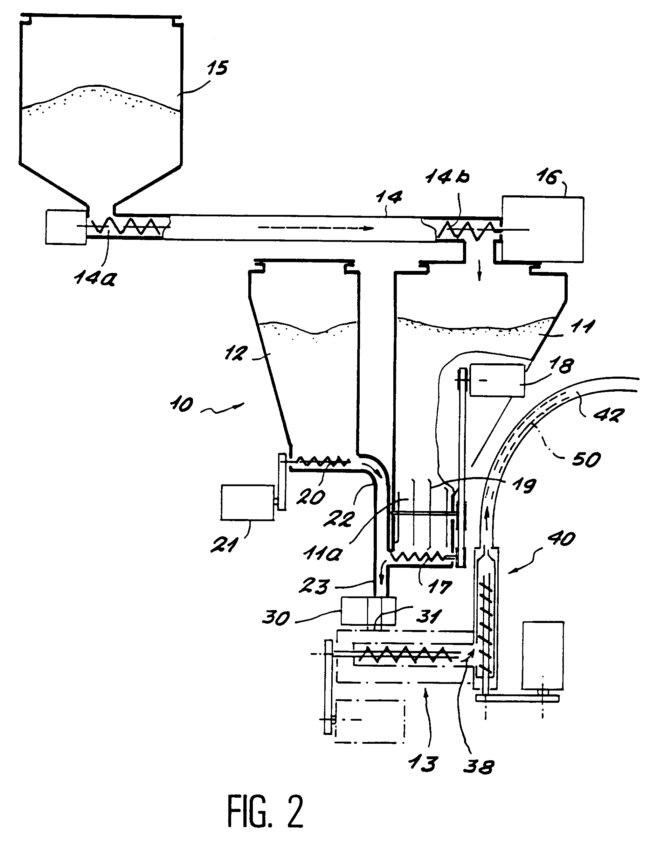

On se réfère d'abord aux figures 1 et 2 qui illustrent, schématiquement, un procédé et une machine de panification selon l'invention destinés à une exploitation permettant de fournir de grandes quantités de pain, -par opposition aux appareils domestiques tels qu'on peut en rencontrer dans la cuisine de la ménagère-, mais qui ne présentent pas les inconvénients, ni les dimensions des installations industrielles de panification connues. La machine comprend un poste 10, ou poste de fabrication de la pâte, avec un silo 11 de farine préalablement salée, un silo 12 de levure et un pétrin 13. Le silo 11 est relié par une canalisation 14 à une réserve 15 dont la sortie est munie d'un vibreur 14a tandis qu'une vis 14b mise en rotation par un moteur 16 commande le réaprovisionnement du silo 11 en réponse à un signal fourni par un capteur de "niveau bas" et l'interrompt lorsqu'est atteint un "niveau haut". A la trémie de sortie 11a du silo 11 sont associés une vis 17 entraînée par un moteur 18 pour commander la quantité de farine salée délivrée par la trémie, ainsi qu'un peigne rotatif 19, entraîné par le même moteur, et qui est destiné à éviter le "voutage" de ladite trémie, des moyens analogues, à savoir une vis 20 entraînée par un moteur 21 étant associés au silo de levure 12 pour commander la quantité de levure pulvérulente délivrée. Cette dernière est acheminée par une canalisation 22 qui se prolonge par une canalisation 23 où est introduite la farine issue du silo 11.

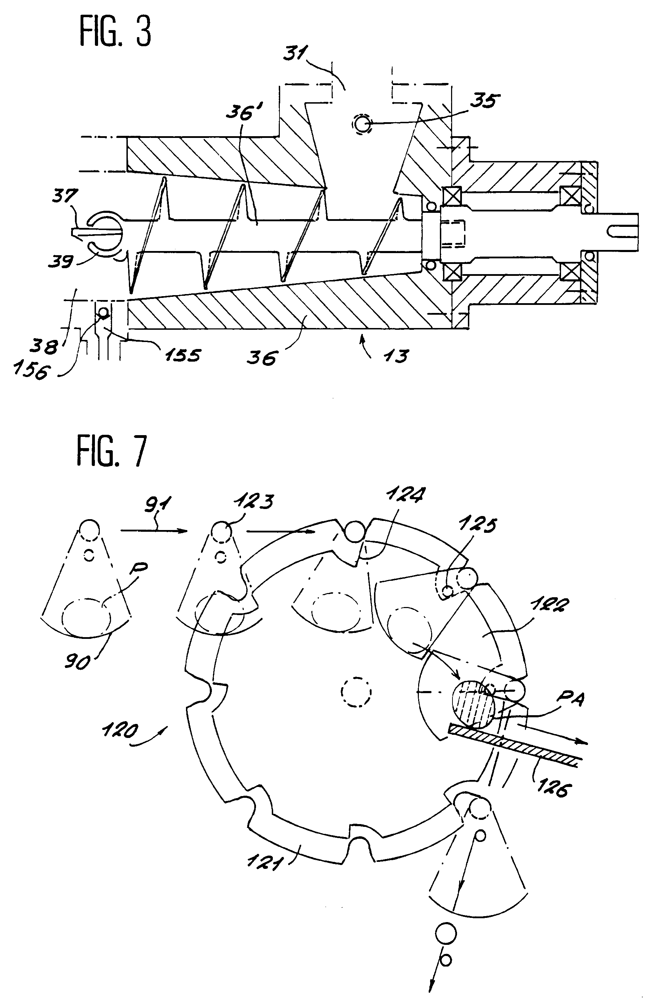

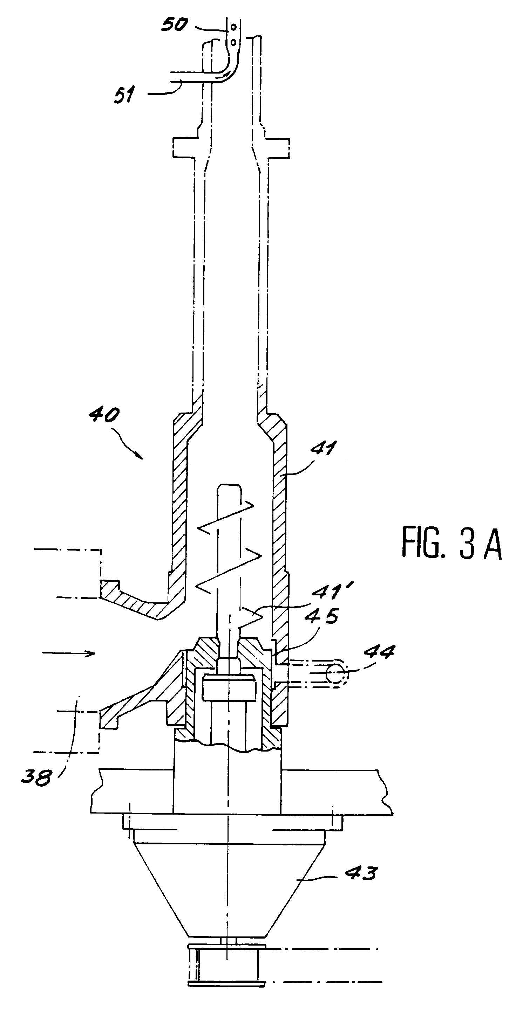

A l'extrémité aval de la canalisation 23, -dans le sens d'écoulement de la farine et de la levure qui y circulent par gravité-, une vanne 30 permet d'isoler ladite canalisation de l'entrée 31 du pétrin 13. Ce dernier, figure 3, qui permet de malaxer en continu de la farine salée, de la levure et de l'eau chauffée par un serpentin S et amenée par une canalisation 35, -reliée à une moto-pompe 35a par une tubulure 35b-, comprend dans un corps 36 une vis cônique 36' comportant à son extrémité aval, dans le sens de circulation de la pâte, un doigt de pétrissage 39 et une pale 37 permettant le nettoyage indispensable du pétrin dont la sortie 38 constitue l'entrée d'un dispositif 40, figure 3A, d'acheminement de la pâte vers un poste 55 de découpe et mise en forme de cette dernière, par l'intermédiaire d'un tube souple, déformable, 42. Au dispositif 40, constitué par un corps de pompe 41 dans lequel est monté à rotation une vis 41' entraînée par un moteur 43, est associée une tubulure 44 qui débouche dans un lamage périphérique 45 du corps de pompe et qui est reliée à une source d'eau sous pression prévue pour le nettoyage du dispositif, comme il sera explicité ci-après. Le pétrin 13 et le dispositif 40 forment ainsi un pétrin-pompe atmosphérique dont le fonctionnement, -contrairement à celui des dispositifs d'extrusion connus-, n'a pas lieu à pression élevée, de sorte que la pâte que délivre le dispositif de pétrin-pompe atmosphérique 13-40 a les caractéristiques de celle des procédés de panification usuels, avec pour résultat une qualité des produits fabriqués semblable à celle desdits produits. Dans le corps de pompe 41 est prévu un capteur de pression 54 à partir duquel est régulée la quantité de pâte fournie par la pompe 40 au dispositif de coupe 55.

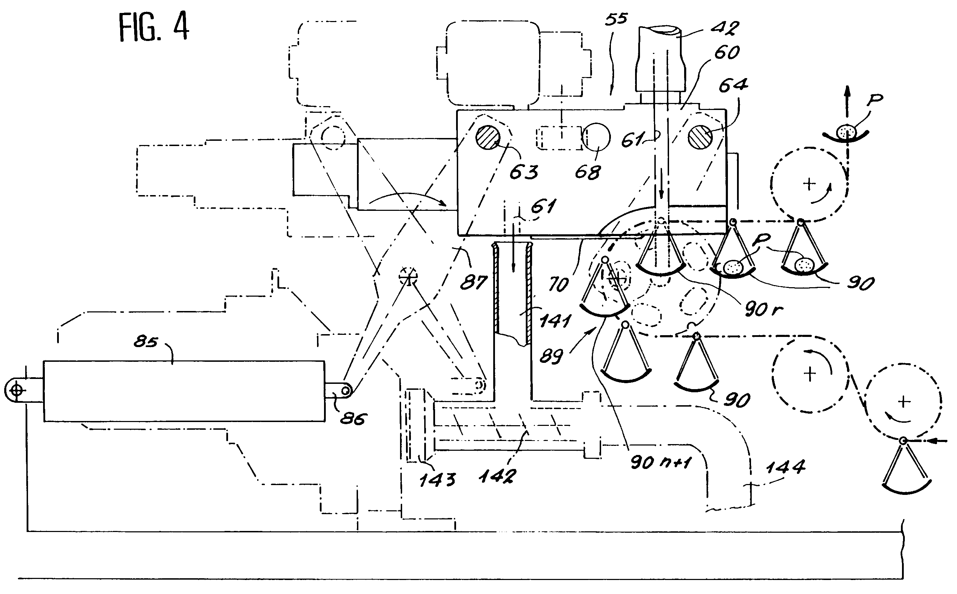

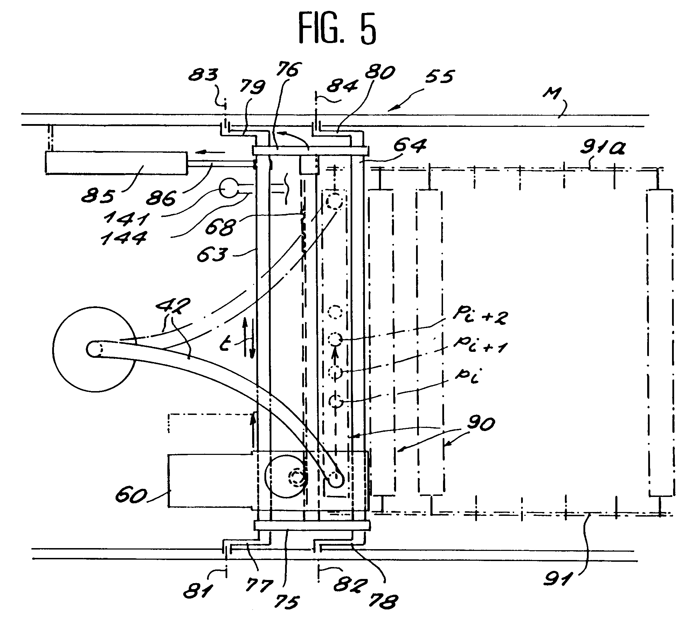

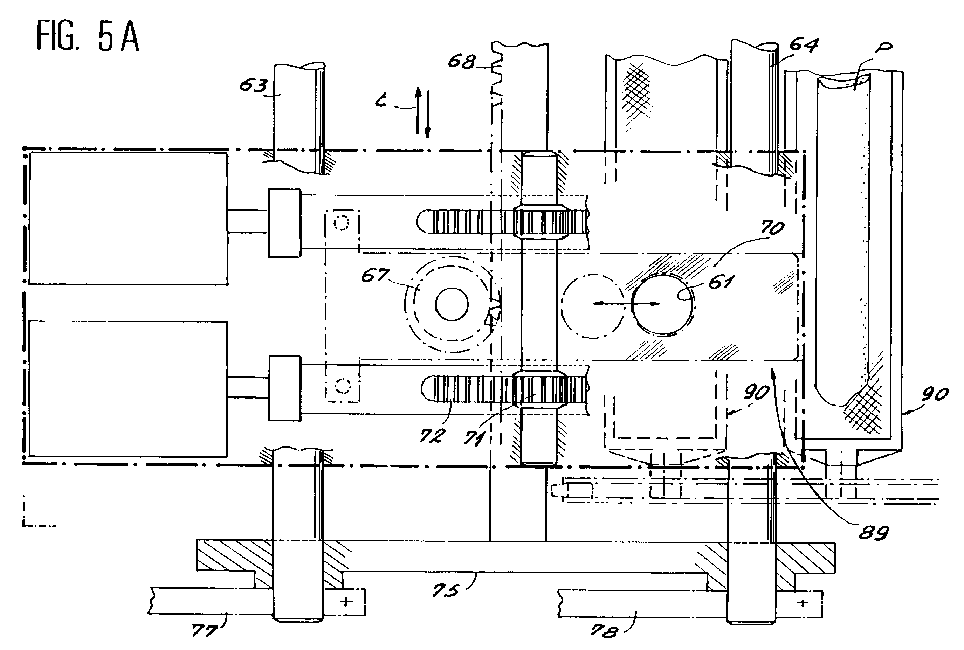

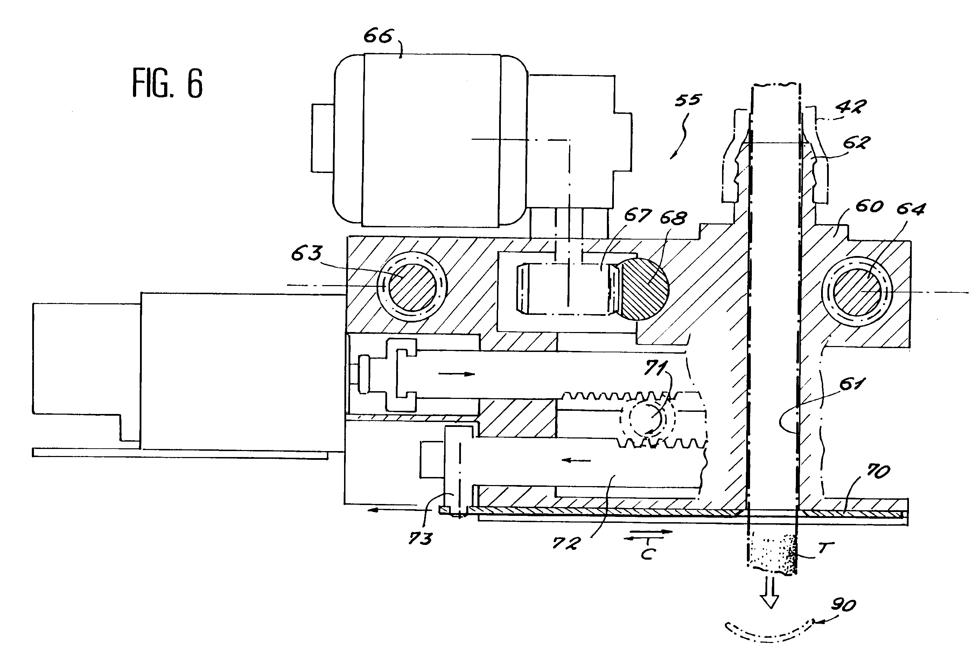

Le tube souple 42, dans lequel est monté, pour son nettoyage, un fin tube perforé 50 qui est relié par un embout 51 à la source d'eau sous pression, aboutit à son extrémité aval, -dans le sens de circulation de la pâte montré par la flèche f-, à un poste 55 de découpe et mise en forme de ladite pâte suivant des pâtons individuels p. Comme bien visible sur les figures 4, 5 et 6, le poste 55 comprend essentiellement un chariot 60 percé d'un canal traversant 61, vertical en condition d'utilisation normale de la machine, et dont l'extrémité supérieure, figure 6, débouche dans un embout 62 sur lequel est monté le tube souple 42. Le chariot 60 est agencé pour se déplacer d'un mouvement de translation de va et vient transversalement à la direction longitudinale de la machine, c'est-à-dire suivant les directions de la double flèche t, figures 5 et 5A, lorsqu'est rendu opératoire un moteur 66 relié à un ensemble pignon-crémaillère 67, 68, le guidage du chariot étant assuré par des axes/glissières 63 et 64.

Sous la face inférieure du chariot 60 est disposée une lame ou couteau de coupe 70, figures 5A et 6, propre à obturer le débouché inférieur du canal 61 pour sectionner le boudin continu de pâte, T, issu du tube 42 et qui a traversé ledit canal 61. La lame couteau 70, -traitée pour ne pas coller à la pâte-, est entraînée dans un mouvement alternatif de va-et-vient suivant la direction de la double flèche c, figure 6, par un ensemble double de pignon denté, comme 71, et de crémaillère, comme 72, dont l'un est "tirant" et l'autre est "poussant" et qui sont attelés sur la lame par des doigts comme 73. Le chariot 60, -avec la lame de coupe 70 qui lui est associée-, est installé dans la machine selon l'invention de manière à occuper deux positions montrées schématiquement l'une en trait plein, l'autre en trait pointillé sur la figure 4 et qui correspondent, respectivement, à la position dite "de travail" en laquelle le chariot découpe le boudin continu de pâte T qu'il reçoit par le tube 42, pour la formation des pâtons p et la pose de ceux-ci sur des réceptacles ou balancelles 90, d'une manière qui sera décrite ci-après et dont l'autre (en pointillés) correspond à une position de nettoyage.

De façon plus précise, les axes glissières 63 et 64 qui guident le mouvement de coulissement en translation du chariot 60 suivant la direction de la double flèche t sont réunis à leurs extrémités par des traverses 75 et 76, d'une part et sont reçus, d'autre part, dans des bras-manivelles 77, 78, 79 et 80, eux-mêmes montés à pivotement autour d'axes 81, 82, 83 et 84 sur le bâti M de la machine, figure 5, de sorte qu'en réponse à l'actionnement d'un vérin 85, -dont la tige 86 est attelée sur l'axe glissière 63 par l'intermédiaire d'une manivelle 87-, le chariot 60 peut passer de la position montrée en trait plein sur la figure 4 à celle montrée en trait pointillé, dégageant de la sorte la zone 89 où les balancelles 90 reçoivent, normalement, les pâtons p.

Ladite zone 89 est celle où les réceptacles ou balancelles 90, solidaires de deux chaînes sans fin 91 et 91a, viennent sous le débouché inférieur du canal traversant 61 du chariot 60 et de la lame 70 qui lui est associée, chaque balancelle recevant, au droit du débouché du canal 61, une certaine quantité de pâte, quantité qui est déterminée par la vitesse de déplacement du chariot suivant la double flèche t, d'une part et l'actionnement du couteau 70, d'autre part. Ainsi, et par une programmation appropriée, un actionnement de la lame de coupe 70 fait que l'on dépose dans les balancelles 90 des quantités de pâte de la forme de petits pains longs, comme montré sur la figure 5A, tandis qu'un actionnement du couteau 70 à de multiples reprises pendant l'aller comme le retour du chariot dépose sur les balancelles 90 des quantités de pâte correspondant à des petits pains, "ronds", pᵢ, pᵢ₊₁, pᵢ₊₂, etc..., figure 5.

Conformément à l'invention, la fabrication de la pâte, de même que sa coupe et sa dépose dans les balancelles 90 sont effectuées dans une plage de température prédéterminée, avantageusement de l'ordre de 30 à 40°C et, pour qu'il en soit ainsi, la machine comprend des moyens de régulation de température montrés schématiquement en 53, figure 1.

Quelle que soit la forme des pâtons p déposés au poste 55 et dans la zone 89 par le dispositif de chariot 60 et de lame-couteau 70, -avant fermentation de la pâte-, les balancelles 90 sont amenées du poste 55 à l'intérieur d'une chambre de fermentation 100, figure 1, chauffée par des résistances électriques 101 au voisinage desquelles est placé le serpentin S de chauffage de l'eau de pétrissage et où les balancelles circulent suivant un trajet sinueux défini par des roues dentées de renvoi comme 102₁, 102₂, ... etc, en partie haute de la chambre et 103₁, 103₂, ... etc, en partie basse, l'entraînement des deux chaînes synchrones 91 et 91a étant sous la dépendance d'un ensemble moteur 105, figure 1.

A la sortie de la chambre de fermentation 100 les balancelles 90 chargées de pâte "levée" pénètrent dans un four 110 qui n'est pas totalement fermé en partie basse, tout en étant toutefois presque totalement obturé par les balancelles qui jouent le rôle d'obturateurs. Une enceinte calorifuge 111 entoure le four 110 sur ses parois latérales et en partie haute pour que la température relativement élevée, de l'ordre de 220 à 280°C qui règne dans ledit four, soit sans influence sur la température règnant dans la chambre de fermentation ou dans la partie de fabrication proprement dite de la pâte.

Le trajet des balancelles 90 dans le four 110, nettement plus court que celui desdites balancelles dans la chambre de fermentation 100, provoque la cuisson des pâtons p à la température la plus appropriée pour les produits en cours de fabrication, ladite température étant régulée à partir d'une sonde 112, laquelle agit sur des résistances de chauffage comme 113 et 114, les premières adjacentes aux parois latérales du four et les secondes à sa partie inférieure où est également prévue une turbine de circulation d'air 115.

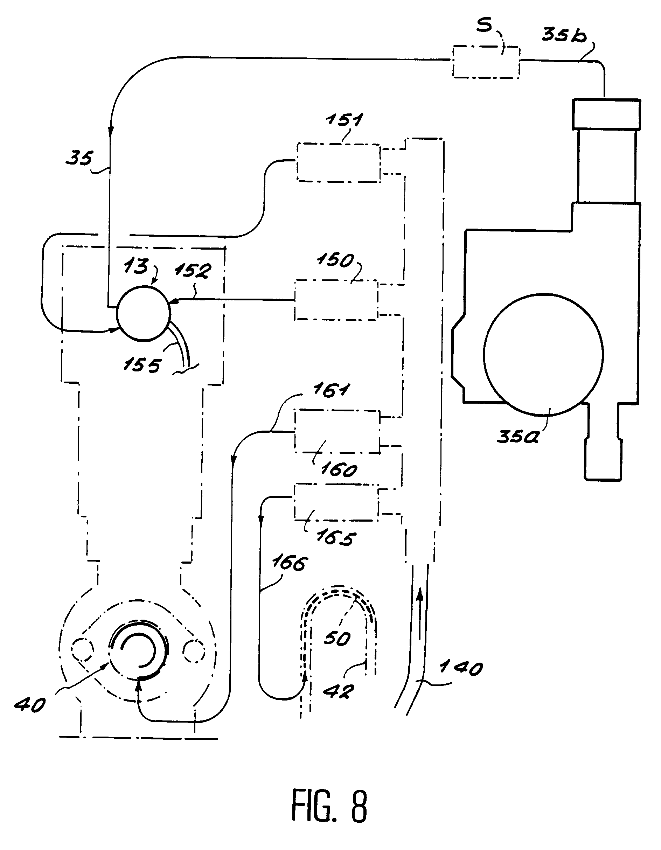

A la sortie 116 du four 110, les balancelles circulent d'abord dans une zone 117, puis dans une zone 118 d'évacuation des produits fabriqués, laquelle comprend, en partie haute, des moyens montrés en 120, figures 1 et 7, pour provoquer le retournement des balancelles 90 et garantir ainsi que les produits panifiés cuits sont effectivement déchargés des balancelles pour que, sur le brin de retour b des chaînes 91 et 91a, lesdites balancelles soient vides et propres à recevoir à nouveau, à leur arrivée au droit du poste 55 et dans la zone 89, de nouvelles masses de pâte pour un fonctionnement en continu de la machine.

Comme montré sur la figure 7, les moyens 120 comprennent essentiellement une roue dentée 121 coaxiale à une roue crantée 122, la première recevant les axes 123 d'articulation des balancelles sur les chaînes 91 et 91a, tandis que la seconde, -dont les crans tels que 124 coopèrent avec des pions comme 125 associés aux nacelles-, provoque le retournement de celles-ci et la chute des produits fabriqués PA sur un plan incliné 126 d'où lesdits produits sont acheminés vers des panetières de réception disposées en sortie de la machine.

Comme montré schématiquement sur la figure 1, celle-ci est enfermée dans un carrossage ou enveloppe 130 dont la partie proche des silos 10 et 11 comprend des pupitres de commande et de programmation, les installations électriques de puissance, tandis que sur le carrossage ou enveloppe externe 130 sont prévus des moyens de raccordement à une source de puissance électrique, montrée schématiquement en 131, des moyens d'alimentation en eau, montrés schématiquement en 132 et des moyens d'évacuation des eaux usées, montrés schématiquement en 133.

Une machine selon l'invention équipée d'environ 300 balancelles et dont les dimensions hors-tout sont de l'ordre de 1 x 2 x 3,5 m pour un poids d'environ 1600-1900 kg peut fournir 800 petits pains individuels à l'heure.

Une telle machine peut ainsi être transportée aisément pour permettre l'alimentation de populations victimes d'une disette ou d'une catastrophe naturelle ou autre ou, en condition d'utilisation normale, être déplacée sans difficulté entre son lieu de construction et son lieu d'exploitation, par exemple un navire où l'on ne dispose que de peu d'espace, ou encore être utilisée en tant qu'unité de fabrication industrielle mobile.

Le fonctionnement d'une machine selon l'invention découle immédiatement de ce qui précède. Après que les silos 11 et 12 aient été chargés de farine salée et de levure, respectivement, et que la machine ait été reliée par ses moyens 131 à une source de puissance électrique et par ses moyens 132 et 133 à un circuit d'alimentation en eau et d'évacuation d'eaux usées, un opérateur affiche sur un pupitre de commande et de programmation la nature, le nombre, la quantité, etc... des produits qui doivent être fabriqués. A partir des instructions reçues, les dispositifs de programmation commandent les moteurs 18 et 21 d'entraînement des vis associées aux trémies de sortie des silos 11 et 12 et des quantités pré-établies de farine salée et de levure sont alors acheminées, en continu, dans la canalisation 23 dont la hauteur entre la sortie des silos et l'entrée 31 dans le pétrin 13 est de l'ordre d'une vingtaine de centimètres.

La farine salée et la levure qui pénètrent dans le pétrin 13 y sont alors malaxées avec une quantité d'eau chauffée, prédéterminée, pour fabriquer, en continu, une pâte reprise à la sortie du pétrin par la pompe 40, l'ensemble du pétrin 13 et de la pompe 40 formant un dispositif pétrin-pompe atmosphérique qui refoule la pâte ainsi frasée et pétrie par le tube souple 42 vers le poste 55 de découpe de ladite pâte et de dépose de celle-ci, sous forme de pâtons p, dans les balancelles 90. Le chariot 60, initialement dans la condition montrée en trait plein sur la figure 5, d'une part, et dans sa condition de travail, également montrée en trait plein sur la figure 4, d'autre part, se déplace alors en direction de la chaîne 91a, tandis que l'actionnement de la lame-couteau 70, -qui sectionne le boudin de pâte T-, forme des pâtons p déposés à l'aller sur une balancelle 90ₙ, alors immobile, puis au retour du chariot sur une balancelle 90ₙ₊₁, elle aussi immobile, et qui a pris la place de la balancelle 90ₙ qui s'est déplacée, entre temps, au rapprochement de la chambre de fermentation.

Dans une forme de réalisation de la machine, chacune des balancelles 90 reste immobilisée au poste 55 pendant 18 secondes environ et progresse ensuite en 3 secondes pour faire place à une balancelle suivante.

A la sortie de la zone 89, -qui est celle où les balancelles 90 sont garnies des pâtons p-, lesdites balancelles suivent un court trajet horizontal puis pénètrent dans la chambre de fermentation 100 où elles sont amenées à se déplacer verticalement, de bas en haut, puis de haut en bas, puis de bas en haut, etc ... le long d'un trajet sinueux parcouru à une vitesse telle que les pâtons demeurent dans ladite chambre de fermentation maintenue à une température constante, de l'ordre de 40°C, pendant une durée moyenne de l'ordre d'une heure, la phase de fermentation étant suivie de celle de cuisson dans le four 110. Après sortie du four 110, les balancelles guidées sur un court trajet horizontal reprennent un mouvement ascendant vertical dans la zone 117 puis atteignent la zone 118 au voisinage de la sortie de la machine où les balancelles sont déchargées et les produits fabriqués évacués.

La durée totale du cycle de fabrication est comprise entre environ 1 heure 40 et 2 heures.

Après un temps donné de fonctionnement, l'invention prévoit un processus de nettoyage. Celui-ci est conduit à l'eau claire à partir d'une conduite principale 140, figure 8, reliée par les moyens 132 au réseau d'eau potable. De façon plus précise, l'invention prévoit, lorsque doit être initiée une phase de nettoyage, de diminuer progressivement la quantité de farine qui est extraite du silo 11 tout en maintenant constante la quantité d'eau introduite dans le pétrin, de sorte que la consistance de la pâte issue du pétrin-pompe 13-40 est de plus en plus fluide et cela pendant une durée de temporisation pré-établie qui permet d'utiliser la pâte à consistance normale présente à l'aval du tube 42. Lorsque le temps de temporisation est écoulé le chariot 60 est déplacé à l'aide du vérin 85 pour l'amener dans la condition montrée en trait mixte sur la figure 4, condition en laquelle le canal traversant 61 est à l'aplomb d'une goulotte verticale 141 munie à sa partie inférieure d'une pompe d'évacuation d'eau de nettoyage 142, entraînée par un moteur 143 et dont la sortie 144 est reliée aux moyens d'évacuation des eaux usées montrés en 133. Lorsque le chariot 60 est dans cette position, l'ouverture d'une électrovanne 165, reliée à une canalisation d'eau claire 140, assure par une tubulure 166 reliée à l'embout 51 le nettoyage du tube souple 42 par l'intermédiaire du tube fin perforé 50 et celui du canal traversant 61, la pâte à consistance fluide issue du pétrin-pompe étant facilement évacuée par la pompe 142. Après arrêt de l'alimentation du pétrin 13 en farine et en levure par fermeture de la vanne 30, on rend opératoire des électrovannes 150 et 151, figure 8, lesquelles sont reliées à la conduite d'eau claire 140. L'ouverture de l'électrovanne 150 introduit alors avec force dans le pétrin 13, et par l'intermédiaire d'une tubulure 152, l'eau de nettoyage au niveau de la vis 36', tandis que l'ouverture de l'électrovanne 151 introduit avec force, par une tubulure 153, l'eau de nettoyage sur la pale 37, l'écoulement d'évacuation étant assuré par une canalisation 155 dont le débouché dans le pétrin 13 est fermé par un clapet 156, figure 3.

Pour le nettoyage de la pompe 40, c'est une électrovanne 160 qui est rendue opératoire et qui introduit l'eau de nettoyage par une tubulure 161 puis par la canalisation 44 dans le lamage 45 du corps de pompe. Une telle disposition assure un nettoyage périphérique complet et total de la pompe et de l'ensemble des parties de la machine où circule la pâte.

Après nettoyage de la machine, de la façon qui vient d'être décrite, le processus de fabrication peut à nouveau être enclenché, en ramenant tout-d'abord le chariot 60 dans sa position opératoire, par manoeuvre du vérin 85, puis en ouvrant la vanne 30 d'alimentation du pétrin, pour une fabrication en continu, comme explicité ci-avant, ladite fabrication ayant lieu à l'abri des impuretés dans la machine enclose dans son enveloppe 130.

## Revendications

1. Procédé de fabrication de pain suivant lequel on prépare une pâte par pétrissage et on fait cuire des pâtons de pâte fermentée, ladite fabrication, continue et automatique, comprenant un pétrissage à l'aide d'un dispositif de pétrin-pompe atmosphérique (13-40) caractérisé en ce que le dispositif de pétrin-pompe atmosphérique utilisé comporte des moyens d'auto-nettoyage intégrés.

2. Procédé de fabrication de pain selon la revendication 1, caractérisé en ce que la mise en forme est effectuée avant fermentation et directement après pétrissage à la sortie du pétrin-pompe (13-40), sans phase de repos.

3. Procédé de fabrication de pain selon la revendication 1 ou la revendication 2, caractérisé en ce que la fabrication de la pâte est conduite dans une plage de température prédéterminée, avantageusement de l'ordre de 30 à 40°C.

4. Procédé de fabrication de pain selon la revendication 1, 2 ou 3, caractérisé en ce que le malaxage de la farine, de l'eau et de la levure est effectué en un temps relativement court et au voisinage des débouchés des silos (11, 12) de farine salée et de levure.

5. Procédé de fabrication de pain selon la revendication 4, caractérisé en ce qu'on fait tomber la farine en chute libre d'une hauteur prédéterminée entre sa sortie du silo (12) et son entrée dans le pétrin-pompe (13, 40).

6. Procédé de fabrication de pain selon l'une quelconque des revendications précédentes, caractérisé en ce qu'il est conduit en faisant circuler les pâtons (p) mis en forme après pétrissage dans une chambre de fermentation (100) où le trajet est suffisamment long pour que la pâte "lève" de façon satisfaisante avant que les pâtons soient introduits dans un four (110) contigü à la chambre de fermentation d'où les produits panifiés sortent après cuisson.

7. Procédé de fabrication de pain selon l'une quelconque des revendications précédentes, caractérisé en ce que pour la phase de nettoyage on modifie le rapport du mélange farine/levure/eau pour rendre plus fluide la pâte fabriquée en continu puis, après une période de temporisation, on procède au lavage à l'eau claire.

8. Machine de fabrication de pain pour la mise en oeuvre du procédé selon l'une quelconque des revendications précédentes, ladite machine comprenant;
. au moins un silo de farine salée (11) et au moins un silo de levure (120) ;
. des moyens (17, 20) pour commander les quantités de farine salée et de levure délivrées à partir de ces silos ;
. des moyens (22, 23) d'acheminement par gravité de la farine et de la levure vers un pétrin-pompe atmosphérique (13, 40) où est également amenée l'eau nécessaire en quantité appropriée ; ladite machine étant caractérisé par
. une canalisation déformable (42) pour l'acheminement en continu de la pâte frasée et pétrie vers un dispositif de coupe (60, 70) pour former des pâtons (p) ;
. des moyens d'auto-nettoyage intégrés au pétrin-pompe ainsi que des moyens de nettoyage de ladite canalisation (42) d'acheminement de la pâte et du dispositif (60) de coupe de cette dernière ;
. des réceptacles (90) des pâtons (p), solidaires de chaînes (91, 91a) qui les font circuler d'abord suivant un trajet sinueux dans une chambre de fermentation (100), puis dans un four (110) ; et
. des moyens (120) pour commander le retournement desdits réceptacles (90) et garantir leur déchargement pour que les pains cuits qu'ils portent en soient extraits avant que lesdits réceptacles, en continuant leur mouvement, soient de nouveau amenés à un poste (55) de dépose des pâtons.

9. Machine de fabrication de pain selon la revendication 8, caractérisée en ce que l'eau amenée au pétrin-pompe (13, 40) est à une température pré-établie et est chauffée à l'aide d'un serpentin (S) avantageusement disposé au voisinage des moyens de chauffage (101) de la chambre de fermentation (100).

10. Machine de fabrication de pain selon la revendication 8, caractérisée en ce que les réceptacles des pâtons sont des balancelles (90) dont les extrémités longitudinales sont solidaires de deux chaînes synchrones (91, 91a) avec, en sortie de la machine, des roues dentées et crantées (121, 122) provoquant le renversement desdites balancelles pour effectivement décharger des produits panifiés cuits.

11. Machine de fabrication de pain selon l'une quelconque des revendications 8 à 10, caractérisée en ce qu'elle comprend des moyens (53) de régulation de la température dans la zone de fabrication de la pâte pour le maintien de ladite température dans une plage prédéterminée.

12. Machine de fabrication de pain selon la revendication 11, caractérisée en ce que lesdits moyens maintiennent la température de la zone de fabrication de pâte à une valeur comprise entre sensiblement 30 et 40°C.

13. Machine de fabrication de pain selon l'une quelconque des revendications 8 à 12, caractérisée en ce qu'un capteur de pression (54) est associé au pétrin-pompe (13, 40) pour réguler la quantité de pâte fournie par la pompe (40) au dispositif de coupe (55).

14. Machine de fabrication de pain selon l'une quelconque des revendications 8 à 13, caractérisée en ce qu'elle comprend des moyens de programmation pour son fonctionnement automatique suivant un cycle choisi parmi une multiplicité de ceux offerts à l'utilisateur comme la forme et le poids des produits panifiés, leur composition, les heures de fonctionnement, en particulier du démarrage de la machine, le comptage des produits fabriqués, les cycles de nettoyage, etc...

15. Machine de fabrication de pain selon l'une quelconque des revendications 8 à 14, caractérisée en ce que les moyens d'auto-nettoyage intégrés du pétrin-pompe (13, 40) comprennent des moyens de nettoyage de la vis (36') du pétrin (13), d'une pale d'extrémité (37) de ladite vis et du doigt de pétrissage (39) ainsi que des moyens de nettoyage périphérique de la pompe (40).

16. Machine de fabrication de pain selon l'une quelconque des revendications 8 à 15, caractérisée en ce que les moyens de nettoyage de la canalisation (42) d'acheminement de la pâte et du dispositif de mise en forme (60) des pâtons comportent une goulotte (141) et une pompe (142, 143) d'évacuation de l'eau de nettoyage circulant dans le canal traversant (61) du chariot mobile (60) lorsque celui-ci est dans sa position de nettoyage.

## Claims

1. A method of making bread whereby a dough is prepared by kneading and lumps of fermented dough are baked, the said production, continuous and automatic, comprising kneading by means of an atmospheric dough mixer-pump means (13-40), characterised in that the dough mixer-pump means comprises integrated self-cleaning means.

2. A method of making bread according to claim 1, characterised in that shaping is carried out prior to fermentation and directly after kneading at the exit from the dough mixer-pump (13-40) without a resting phase.

3. A method of making bread according to claim 1 or claim 2, characterised in that production of the dough is carried out in a predetermined temperature range advantageously of the order of 30 to 40°C.

4. A method of making bread according to claim 1, 2 or 3, characterised in that the mixing of the flour, water and yeast is carried out in a relatively short time and in the vicinity of the mouths of the yeast sifted flour silos (11, 12).

5. A method of making bread according to claim 4, characterised in that the flour is caused to fall freely from a predetermined height between its emergence from the silo (12) and its entry into the dough mixer-pump (13-14).

6. A method of making bread according to any one of the preceding claims, characterised in that it is carried out by causing a circulation of the lumps (p) shaped after kneading in a fermentation chamber (100) where the path is sufficiently long for the dough to "rise" satisfactorily before the lumps are introduced into an oven (110) contiguous upon the fermentation chamber from which the products of conversion of flour into dough emerge after baking.

7. A method of making bread according to any one of the preceding claims, characterised in that for the cleaning phase the ratio of the flour/yeast/water mixture is varied to make more fluid the dough produced continuously and then, after a dwell time, washing is carried out with clean water.

8. A machine for making bread for carrying out the method according to any one of the preceding claims, said machine comprising :
- at least one salted flour silo (11) and at least one yeast silo (120);
- means (17, 20) for controlling the quantities of salted flour and yeast delivered from these silos;
- means (22, 23) for routing by gravity some flour and yeast to an atmospheric dough mixer-pump (13, 40) to which the necessary quantity of water is likewise conveyed; said machine geing characterised by :
- a deformable ducting (42) for continuously conveying the kneaded dough to a cutting device (60, 70) for forming lumps (p);
- self-cleaning means integrated into the dough mixer-pump and also means of cleaning the said ducting (42) for conveying the dough and of the device (60) for cutting this latter;
- receptacles (90) for lumps (p) rigid with chains (91, 91a) which cause them to circulate first in accordance with a sinuous path in a fermentation chamber (100) then in an oven (110), and
- means (120) of controlling the return of the said receptacles (90) and of guaranteeing their discharge so that the cooked loaves which they carry are extracted therefrom before the said receptacles, continuing their movement, are again conveyed to a lump depositing station (55).

9. A machine for making bread according to claim 8, characterised in that the water carried to the dough mixer-pump (13, 40) is at a predetermined temperature and is heated by means of a coil (S) advantageously disposed in the vicinity of the means (101) of heating the fermentation chamber (100).

10. A machine for making bread according to claim 8, characterised in that the receptacles of the lumps are swing trays (90) the longitudinal ends of which are fixed to two synchronous chains (91, 91a) with, at the outlet from the machine, toothed and notched wheels (121, 122) producing a reversal of the said swing trays in order effectively to discharge the baked products which are converted to bread.

11. A machine for making bread according to any one of claims 8 to 10, characterised in that it comprises means (53) of regulating the temperature in the dough producing zone in order to maintain the said temperature within a predetermined range.

12. A machine for making bread according to claim 11, characterised in that the said means maintain the temperature of the dough producing zone at a level comprised between substantially 30 and 40°C.

13. A machine for making bread according to any one of claims 8 to 12, characterised in that a pressure sensor (54) is associated with the dough mixer-pump (13, 40) to regulate the quantity of dough delivered by the pump (40) to the cutting device (55).

14. A machine for making bread according to any one of claims 8 to 13, characterised in that it comprises means of programming its automatic functioning in accordance with a cycle chosen from a multiplicity of those offered to the user such as the form and weight of the products converted from flour to dough, their composition, the operating hours, particularly the starting of the machine, the counting of the products produced, the cleaning cycles, etc.

15. A machine for making bread according to any one of claims 8 to 14, characterised in that the self-cleaning means integrated in the dough mixer-pump (13, 40) comprise means of cleaning the kneader (13) by means of a screw (36'), an end blade (37) on the said screw and the kneading member (39) as well as peripheral pump cleaning means (40).

16. A machine for making bread according to any one of claims 8 to 15, characterised in that the means of cleaning the duct (42) for conveying dough and of the means (60) of shaping the lumps comprise a mouth (141) and a pump (142, 143) for evacuating cleaning water circulating in the duct (61) traversing the movable carriage (60) when this latter is in its cleaning position.

## Patentansprüche

1. Verfahren zur Brotherstellung bei dem eim Teig durch Kneten hergestellt wird und die Teigwürste aus gegorenem Teig gebacken werden, wo die kontinuierliche und automatische Herstellung das Kneten mittels einer Vorrichtung (13-40) aus Knetmaschine und Pumpe unter Atmosphärendruck beinhaltet daduch gekennzeichnet, daß die Knetmaschine und Pumpe unter Atmosphärendruck eine intergrierte Selbstreinigungseinrichtung aufweist.

2. Verfahren zur Brotherstellung nach Anspruch 1, **dadurch gekennzeichnet, daß** die Formgebung unmittelbar nach dem Kneten und vor der Gärung am Austritt der Vorrichtung (13-40) aus Knetmaschine und Pumpe ohne Ruhephase erfolgt.

3. Verfahren zur Brotherstellung nach Anspruch 1 oder 2, **dadurch gekennzeichnet, daß** die Teigherstellung in einem vorbestimmten Temperaturbereich, der vorzugsweise 30 bis 40°C beträgt, ausgeführt wird.

4. Verfahren zur Brotherstellung nach einem der Ansprüche 1, 2 und 3, **dadurch gekennzeichnet, daß** das Mischen von Mehl, Wasser und Hefe in relativ kurzer Zeit und in der Nähe der Austritte der Bunker (11, 12) für gesalzenes Mehl und für Hefe ausgeführt wird.

5. Verfahren zur Brotherstellung nach Anspruch 4, **dadurch gekennzeichnet, daß** sich das Mehl zwischen seinem Austritt aus dem Bunker (12) und seinem Eintritt in die Vorrichtung (13, 40) aus Knetmaschine und Pumpe im freien Fall aus vorbestimmter Höhe befindet.

6. Verfahren zur Brotherstellung nach einem der vorhergehenden Ansprüche, **dadurch gekennzeichnet, daß** dieses ausgeführt wird, indem die im Anschluß an das Kneten geformten Teigwürste (p) in einer Gärungskammer (100) umgeführt werden, in der die Bahnlänge ausreicht, um den Teig in ausreichendem Maße "gehen zu lassen", bevor die Teigwürste in einen an die Gärungskammer angrenzenden Ofen (110) eingeführt werden, den die zu Brot verarbeiteten Produkte nach dem Backen verlassen.

7. Verfahren zur Brotherstellung nach einem der vorhergehenden Ansprüche, **dadurch gekennzeichnet, daß** für die Reinigungsphase das Verhältnis der Mischung aus Mehl, Hefe und Wasser geändert wird, um den kontinuierlich hergestellten Teig flüssiger zu gestalten, wobei dann nach einer Wartezeit die Spülung mit klarem Wasser vorgenommen wird.

8. Vorrichtung zur Brotherstellung für die Ausführung des Verfahrens nach einem der vorhergehenden Ansprüche, die aufweist :
zumindest einen Bunker (11) für gesalzenes Mehl und zumindest einem Bunker (120) für Hefe,
Einrichtungen (17, 20) zur Steuerung der aus diesen Bunkern geförderten Menge an gesalzenem Mehl und an Hefe, Einrichtungen (22, 23) zur Schwerkraftförderung von Mehl und Hefe zur Vorrichtung (13, 40) aus Knetmaschine und Pumpe unter Atmosphärendruck, der ebenfalls das benötigte Wasser in angemessener Menge zugeführt wird, Vorrichtung gekennzeichnet : - durch eine verformbare Rohrleitung (42), um den durchgearbeiteten und gekneteten Teig einer Schneidvorrichtung (60,70) zum Ausbilden von Teigwürsten (p) kontinuierlich zuzuführen,
- eine in die Vorrichtung aus Knetmaschine und Pumpe integrierte Selbstreinigungseinrichtung sowie eine Einrichtung zur Reinigung der Rohrleitung (42) zum Zuführen des Teigs und der Vorrichtung (60) zum Schneiden von diesem,
- an Ketten (91, 91a) befestigte Aufnahmeeinrichtungen (90) für die Teigwürste (p), wobei die Ketten die Aufnahmeeinrichtungen zuerst einer sinusförmigen Bahn folgend in der Gärungskammer (100), dann in einem Ofen (110) umführen, und
- eine Einrichtung (120) zum Steuern des Umwendens der Aufnahmeeinrichtungen (90) und zum Sicherstellen ihres Entladens, damit die von diesen getragenen, gebackenen Brote von diesen entfernt werden, bevor die Aufnahmeeinrichtungen bei Fortsetzung ihrer Bewegung erneut zu einer Stelle (55) zum Aufbringen der Teigwürste geführt werden.

9. Vorrichtung zur Brotherstellung nach Anspruch 8, **dadurch gekennzeichnet, daß** das der Vorrichtung (13, 40) aus Knetmaschine und Pumpe zugeführte Wasser eine vorbestimmte Temperatur hat und mittels eines Schlangenrohrs (S), das sich vorteilhafterweise in der Nähe der Heizeinrichtung (101) der Gärungskammer (100) befindet, erwärmt wird.

10. Vorrichtung zur Brotherstellung nach Anspruch 8, **dadurch gekennzeichnet, daß** die Aufnahmeeinrichtungen für die Teigwürste schaukelartige Einrichtungen (90) sind, deren Längsenden an zwei gleichlaufenden Ketten (91, 91a) befestigt sind, wobei am Ausgang der Vorrichtung gezahnte und mit Kerben versehene Räder (121, 122) das Umkippen der schaukelartigen Einrichtungen bewirken, um die zu Brot verarbeiteten, gebackenen Produkte tatsächlich zu entladen.

11. Vorrichtung zur Brotherstellung nach einem der Ansprüche 8 bis 10, **dadurch gekennzeichnet, daß** diese eine Einrichtung (53) aufweist, die die Temperatur im Raum der Teigherstellung regelt, um die Temperatur in einem vorbestimmten Bereich zu halten.

12. Vorrichtung zur Brotherstellung nach Anspruch 11, **dadurch gekennzeichnet, daß** die Einrichtung die Temperatur des Raumes der Teigherstellung auf einem Wert hält, der im wesentlichen zwischen 30 und 40°C liegt.

13. Vorrichtung zur Brotherstellung nach einem der Ansprüche 8 bis 12, **dadurch gekennzeichnet, daß** ein Drucksensor (54) mit der Vorrichtung (13, 40) aus Knetmaschine und Pumpe verbunden ist, um die Menge an Teig zu regulieren, die durch die Pumpe (40) der Schneidvorrichtung (55) zugeführt wird.

14. Vorrichtung zur Brotherstellung nach einem der Ansprüche 8 bis 13, **dadurch gekennzeichnet, daß** diese eine Programmiereinrichtung für ihren automatischen Betrieb entsprechend einem Zyklus aufweist, der unter der Vielzahl von den dem Nutzer angebotenen Zyklen ausgewählt wurde, wie z.B. in bezug auf Form und Gewicht der zu Brot verarbeiteten Produkte, ihre Zusammensetzung, die Betriebsstunden, insbesondere die Startzeit der Vorrichtung, das Zählen der hergestellten Produkte und die Reinigungszyklen.

15. Vorrichtung zur Brotherstellung nach einem der Ansprüche 8 bis 14, **dadurch gekennzeichnet, daß** die mit der Vorrichtung (13, 40) aus Knetmaschine und Pumpe integrierte Selbstreinigungseinrichtung eine Reinigungseinrichtung für die Schnecke (36') der Knetmaschine (13), für das äußerste Blatt (37) der Schnecke und für den Knetfinger (39) sowie eine Einrichtung zur peripheren Reinigung der Pumpe (40) aufweist.

16. Vorrichtung zur Brotherstellung nach einem der Ansprüche 8 bis 15, **dadurch gekennzeichnet, daß** die Reinigungseinrichtung für die Rohrleitung (42) zum Zuführen des Teigs und für die Vorrichtung (60) zur Formgebung der Teigwürste eine Rinne (141) und eine Pumpe (142, 143) zum Abführen des Reinigungswasser aufweist, das im hindurchgehenden Kanal (61) des beweglichen Schlittens (60) zirkuliert, wenn sich dieser in seiner Reinigungsposition befindet.
